# EUROPÄISCHE PATENTANMELDUNG

(11) **EP 2 746 695 A1**
(43) Veröffentlichungstag der Anmeldung: **25.06.2014**
(21) Anmeldenummer: 12198275.5
(22) Anmeldetag: 19.12.2012
(51) Int. Cl.: F24J 2/52

(54) **Photovoltaiksystem**

(71) Anmelder: SST Holding GmbH, 6710 Nenzing (AT)
(72) Erfinder: Muther, Mathias, 6822 Röns (AT); Sen, Renan, 6710 Nenzing (AT)
(74) Vertreter: Behrmann, Niels

(57) **Zusammenfassung**

Die Erfindung betrifft ein Photovoltaiksystem (1) mit mindestens einem Photovoltaikmodul (100) und Stützmitteln (10) zum Stützen und/oder Halten des jeweiligen Photovoltaikmoduls (100) unter einem Neigungswinkel zu einer Montageebene. Erfindungsgemäß ist vorgesehen, dass die Stützmittel (10) für jedes der Photovoltaikmodule (100) erste und zweite Angriffsmittel (20 bzw. 30) umfassen, die jeweils an einen Rahmenabschnitt (102) des zugehörigen Photovoltaikmoduls (100) angreifen, wobei die ersten Angriffsmittel (20), das Photovoltaikmodul (100) und die zweiten Angriffsmittel (30) in einer Erstreckungsrichtung (R) auf einander folgend angeordnet sind, und wobei die mechanische Verbindung in der Erstreckungsrichtung (R) zwischen den ersten und der zweiten Angriffsmittel (20 bzw. 30) nur über einen Abschnitt (104) des Photovoltaikmoduls (100), insbesondere einen Rahmenabschnitt (102) des Photovoltaikmoduls (100), erfolgt.

## Beschreibung

Die vorliegende Erfindung betrifft ein Photovoltaiksystem nach dem Oberbegriff des Anspruchs 1 sowie die Verwendung eines Trägerelements zur Herstellung eines Photovoltaiksystems.

Aus dem Stand der Technik sind Photovoltaiksysteme bekannt, bei denen mehrere Photovoltaikmodule durch Trägerelemente in Form von speziellen Gestellen mit einander verbunden, in einer Montageebene bzw. Aufstellfläche montiert werden und winklig zu dieser ausgerichtet werden, um eine optimierte Sonneneinstrahlung pro Flächeneinheit zu erreichen.

Bei der Montage der bekannten Systeme werden die Photovoltaikmodule jeweils auf die Gestelle aufgebracht, die die Photovoltaikmodule gegenüber einer Montage- bzw. Aufstellebene stützen. Insbesondere werden Photovoltaikmodule auf Gestellte in Form einer Dreieckskonstruktion aufgelegt, wobei die Photovoltaikmodule jeweils auf einem winklig zur Aufstellfläche ausgerichteten Auflageschenkel aufliegen und wobei der Auflageschenkel das Photovoltaikmodul auf jeder Höhe, also jedem Abstand zur Montageebene, stützen. Der Auflageschenkel trägt hierbei das Photovoltaikmodul, stützt es auf jeder Höhe und nimmt, zusammen mit den weiteren Schenkeln, Kräfte in Längsrichtung, die auf das System wirken, auf.

Zum Verbinden einer Vielzahl von Photovoltaikmodulen in mehreren Reihen zu einem flächigen Photovoltaiksystem werden die jeweiligen Reihen über Verbindungsteile verbunden. Beispielsweise werden die jeweiligen Trägerelemente an durchgehenden Schienen montiert. Dies sichert zum einen die Relativlage der Photovoltaikmodule zu einander, als auch die Lage des Photovoltaiksystems gegenüber bzw. in der Montageebene.

Die bekannten Gestelle haben den Nachteil, dass sie durch spezielle Formteile, insbesondere als Aluminiumpressteile, ausgebildet werden, wodurch eine Herstellung dieser Formteile materialintensiv und aufwendig ist. Zudem muss das Gestell als Grundlage der Montage erst kompliziert aufgebaut werden.

Aufgabe der vorliegenden Erfindung ist es, ein Photovoltaiksystem anzugeben, das die vorbeschriebenen Nachteile nicht aufweist, das sich durch einfach herzustellende Montageteile und einfache Montage auszeichnet.

Diese Aufgabe wird durch ein System mit den Merkmalen des Anspruchs 1 sowie die Verwendung eines Trägerelements mit den Merkmalen des unabhängigen Verwendungsanspruchs gelöst.

Dadurch, dass das Photovoltaikmodul im erfindungsgemäßen Photovoltaiksystem in einem Abschnitt zwischen der ersten und zweiten Angriffsmitteln die mechanische bzw. tragende Verbindung ausschließlich über einen Rahmenabschnitt des Photovoltaikmoduls erfolgt, also das Photovoltaikmodul in diesem Abschnitt nicht von Stützmitteln auf gleicher Höhe gestützt wird und das Photovoltaikmodul somit selbst zur statischen Tragfähigkeit der Konstruktion beiträgt, also selbsttragender Art ist, ergibt sich ein besonders vorteilhafter Aufbau.

Es wird Material gespart, da Elemente der Stützmittel oder sonstiger weiterer Bauteile, die zu diesen Kraftaufnahmen bestimmt sind, entfallen können.

Durch den Wegfall der weiteren mechanischen Verbindung in Längsrichtung zwischen den ersten und der zweiten Angriffsmitteln über Elemente, die nicht Teil des Photovoltaikmoduls sind, ergibt sich auch eine besondere Flexibilität des Systems, da die Photovoltaikmodule nicht in ein starres System gezwungen werden, das in Längsrichtung durch das Photovoltaikmodul und das weitere Element überbestimmt ist. Beispielsweise kann eine solche Überbestimmung in Längsrichtung zu Beschädigungen der Photovoltaikmodule, wenn durch Unterschiedliche Ausdehnung des weiteren Elements und des Photovoltaikmoduls das Photovoltaikmodul durch das weitere Element verzerrt wird.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Bevorzugt umfassen die Stützmittel mindestens ein einstückiges Trägerelement, das an zwei Photovoltaikmodule jeweils randseitig angreift und die Photovoltaikmodule stützt. Durch die Einstückigkeit wird eine besonders einfache Montage ermöglicht. Es müssen nicht umständlich mehrere Teile zusammen gesetzt werden, um eine Montage der Photovoltaikmodule zu ermöglichen. Vielmehr kann das System durch einfaches Anlegen (bzw. Angreifenlassen) der (Photovoltaik-)Module an die Trägermittel unmittelbar in Position gebracht werden. Gegebenenfalls können die Module durch geeignete Fixiermittel, insbesondere Schraub- und/oder Klemmmittel, an den Trägermitteln fixiert werden; wesentlich ist jedoch, dass eine einstückige Verbindung durch die Trägermittel zwischen den Modulen besteht.

Bevorzugt kann der Profilträger durch Kanten bzw. Biegen eines flachen vorgebehandelten Metalls, beispielsweise Aluminium, oder Metalllegierung, hergestellt werden. Diese lassen sich einfach mit üblichen Verarbeitungsmaschinen von Metallfachbetrieben herstellen, wobei das Ausgangsmaterial weit ebenfalls verbreitet ist. Eine umständliche möglicherweise zentrale Produktion, insbesondere durch spezialisierte Herstellungsmaschinen für spezielle Profile, ist somit nicht notwendig. Insgesamt ergeben sich hieraus somit Vorteile sowohl in den Herstellungs- als auch den Logistikkosten.

Weiter bevorzugt greift der Profilträger an die jeweiligen Photovoltaikmodule durch eine Angriffsfläche. Die Angriffsflächen erstrecken sich bevorzugt in einem Winkel 0°und 60°, bevorzugt zwischen 5° und 45°, besonders bevorzugt zwischen 10° und 30°, zu der Montageebene bzw. Aufstellfläche.

Um den Profilträger an die Montageebene anlegen zu können, weist der Profilträger bevorzugt einen Zwischenabschnitt auf, der eine sich in der Montageebene erstreckenden Montageebenenanlagenfläche aufweist und weiter bevorzugt die ersten und die zweiten Angriffsmittel mechanisch (also kraftübertragend) verbindet.

Von besonderem Vorteil kann mit mehreren bevorzugt einstückigen Profilträger auf besonders einfache Weise ein Photovoltaiksystem gebildet werden. Hierbei ist es nicht (wie im Stand der Technik) notwendig, zuerst kompliziert eine Rahmenkonstruktion aus einer Vielzahl von Teilen aufzubauen. Mit einstückigen Profilträgern, die sowohl an einem ersten als auch einem zweiten Photovoltaikmodul anliegen bzw. angreifen, kann auf besonders einfache Weise ein Photovoltaiksystem montiert werden. Die Montage erfolgt hierbei zunächst durch Anlegen der Angriffsmittel an die jeweiligen Photovoltaikmodule. Bei Bedarf können die Photovoltaikmodule anschließend, beispielsweise durch Klemm- und/oder Schraubmittel, fixiert werden und/oder die Trägerelemente an oder in der Montageebene, beispielsweise durch Gewichtselemente und/oder Klemm- und/oder Schraubmittel, ebenfalls fixiert werden.

Hierdurch lässt sich auf vorteilhafte Weise ein Photovoltaiksystem montieren, insbesondere bei dem Photovoltaikmodule in Erstreckungsrichtung in mehreren Reihen und in einer Reihe ebenfalls mehrere Photovoltaikmodule angeordnet sind.

Um möglichst einfach mehrere Photovoltaikmodule in einer Reihe zu vorzusehen, hat es sich als vorteilhaft herausgestellt, dass eines der einstückigen Trägerelemente an den ersten und/oder zweiten Angriffsmitteln jeweils an zwei Photovoltaikmodule angreift. Hierdurch ist zum einen die Relativlage dieser Photovoltaikmodule zu einander gesichert, zudem wird die Anzahl der notwendigen Trägerelemente reduziert, was neben der Montageerleichterung auch den Logistikaufwand reduziert.

Durch die winklige Anordnung zur Montageebene kann, je nach Sonnenstand, eines der Photovoltaikmodule des Photovoltaiksystems einen Schatten auf ein benachbartes weiteres der Photovoltaikmodule werfen. Um dem entgegenzuwirken, hat es sich als vorteilhaft herausgestellt, den Zwischenabschnitt so auszubilden, dass er durch einen ausreichenden Abstand der Photovoltaikmodule einen solchen Schattenwurf auf ein weiteres Photovoltaikmodul verhindert oder zumindest verringert. Insbesondere hat es sich als vorteilhaft herausgestellt, dass der Zwischenabschnitt mindestens dem 1-fachen, bevorzugt dem 1,5 bis 3,5-fachen, weiter bevorzugt dem 2 bis 3-fachen der Höhe der höheren der Angriffsflächen (also dem maximalen Abstand der beiden Angriffsflächen von der Montageebene) entspricht. Diese Werte bieten einen besonders vorteilhaften Kompromiss aus Flächennutzung mit Photovoltaikmodulen durch enge Zusammenstellung und Schattenwurfminimierung.

Um die Lage des Photovoltaiksystems in der Montageebene zu sichern, können an den Stützmitteln, insbesondere an dem Zwischenabschnitt des einstückigen Trägerelements, Befestigungsmittel vorzusehen. Die Befestigungsmittel können einen Form- und/oder Kraftschluss zwischen dem Photovoltaiksystem und der Montageebene sichern.

Insbesondere eignen sich Gewichts- bzw. Beschwerungselemente als Befestigungsmittel, die insbesondere den Zwischenabschnitt der Stützmittel an die Montageebene andrücken. Solche Gewichtselemente zeichnen sich durch ihre einfache Montierbarkeit und einfache Herstellbarkeit aus. Sie sind außerdem unabhängig von der Beschaffenheit der Montageebene einsetzbar, benötigen insbesondere keine Gegengewinde und/oder Einschlagsschichten für Nägel und/oder Schrauben. Diese können jedoch natürlich bei Bedarf und Eignung zusätzlich oder alternativ als Befestigungsmittel eingesetzt werden.

Weiterhin wird Schutz beantragt für eine erfindungsgemäße Verwendung eines Trägerelements mit den Merkmalen des unabhängigen Verwendungsanspruches. Ein solcher ermöglicht auf besonders vorteilhafte Weise einen Aufbau eines Photovoltaiksystems, bei denen die Photovoltaikmodule selbsttragender Art sind, also selbst zur statischen Tragfähigkeit der Konstruktion beitragen. Zur Vermeidung von Wiederholungen sollen im Rahmen des Photovoltaikmoduls offenbarten Merkmale des Trägerelements gleichermaßen für die Verwendung eines Trägerelements offenbart gelten.

Besonders vorteilhaft weisen die ersten Angriffsmittel einen größeren Abstand zu der Montageebene auf als die zweiten Angriffsmittel, sind also höher als diese. Hierdurch wird es ermöglicht, mit Trägerelement einer einzigen Bauart eine Vielzahl von Photovoltaikmodulen zu verbinden, wobei in Erstreckungsrichtung abwechselnd hohe und tiefe Angriffsflächen auf einander folgen, was insbesondere bei einer Ausrichtung zum Äquator (also beispielsweise auf der Nordhalbkugel zu einer Südseite) eine gewünschte Ausrichtung darstellt.

Um die Photovoltaikmodule auch bei großen Lasten sicher zu stützen, beispielsweise bei zu erwartender starker Schneebelastung auf der Oberfläche, können weitere Stützmittel, insbesondere in Form eines Stützfußes, zum Einsatz kommen, die die jeweiligen Photovoltaikmodule im Verbindungsabschnitt abschnittsweise stützen. Diese weiteren Stützmittel greifen hierzu sowohl an dem Verbindungsabschnitt des Photovoltaikmoduls, als auch an der Montageebene an und bilden eine (weitere) tragende Verbindung zwischen diesen. Gleichwohl bleibt das Photovoltaikmodul im Verbindungsabschnitt außerhalb des Angriffsbereichs der weiteren Stützmittel selbsttragend.

Insbesondere um einem ungewollten Abdecken durch starken Wind entgegen zu wirken, können Abdeckmittel vorgesehen sein, die den (Wind-)Strömungswiderstand des Photovoltaiksystems so beeinflussen, dass Kräfte, die senkrecht zur Montageebene wirken und von der Montageebene weg wirken, minimiert werden

Weitere Vorteile, Merkmale und Einzelheiten der Erfindung ergeben sich aus der nachfolgenden Beschreibung bevorzugter Ausführungsbeispiele sowie anhand der Zeichnungen, in denen gleiche Elemente oder Elemente mit gleicher Funktion mit gleichen Bezugszeichen gekennzeichnet sind. Diese zeigen in:
- Fig. 1: eine schematische Darstellung eines ersten Ausführungsbeispiels eines Trägerelements zur Herstellung eines Photovoltaiksystems in einer perspektivischen Ansicht,
- Fig. 2: eine schematische Darstellung von vier der Trägerelemente gemäß Fig. 1 mit einem Photovoltaikmodul und einem Windschutz in einer perspektivischen Ansicht,
- Fig. 3: Fig. 2 in einer seitlichen Schnittansicht,
- Fig. 4: ein Photovoltaiksystem mit einer Vielzahl von Photovoltaikmodulen, die über Trägerelemente gem. Fig. 1 verbunden sind in einer perspektivischen Ansicht,
- Fig. 5: Fig. 4 in einer Draufsicht,
- Fig. 6: ein zweites Ausführungsbeispiel eines Trägerelements in einer perspektivischen Ansicht,
- Fig. 7: das Trägerelement aus Fig. 6 mit Fixiermitteln,
- Fig. 8: ein System mit einem zweiten Ausführungsbeispiel eines Trägerelements sowie mit einem ausschnittsweise gezeigten dritten Ausführungsbeispiels eines Trägerelements,
- Fig. 9: das System aus Fig. 8 mit zwei aufgebrachten Photovoltaikmodulen in einer Seitenansicht,
- Fig. 10: Fig. 9 in einer perspektivischen Ansicht,
- Fig. 11: ein Photovoltaiksystem mit einer Vielzahl von Photovoltaikmodulen sowie Trägerelementen gem. Fig. 8.

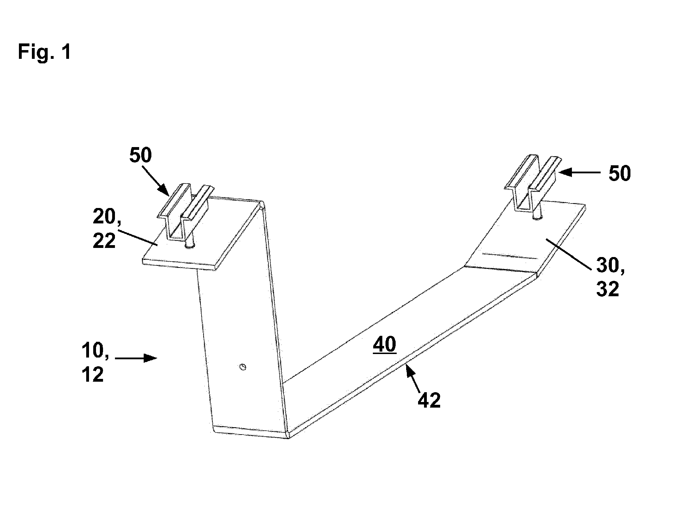

Fig. 1 zeigt ein erstes Ausführungsbeispiel von Stützmitteln 10 mit einem Trägerelement 12 zum Stützen eines Photovoltaikmoduls in einem Photovoltaiksystem. Es umfasst erste Angriffsmittel 20 mit einer ersten Angriffsfläche 22 zum unmittelbaren Anlegen an einen Rahmenabschnitt eines Photovoltaikmoduls, zweite Angriffsmittel 30 mit einer zweiten Angriffsfläche 32 einen Zwischenabschnitt 40 mit einer Montageebenenanlagenfläche 42, die an der Montageebene anliegt. An den Angriffsmittel sind jeweils Fixiermittel 50 in Form von Klemmmitteln zum Fixieren der Photovoltaikmodule gegenüber den Stützmitteln 10 vorgesehen.

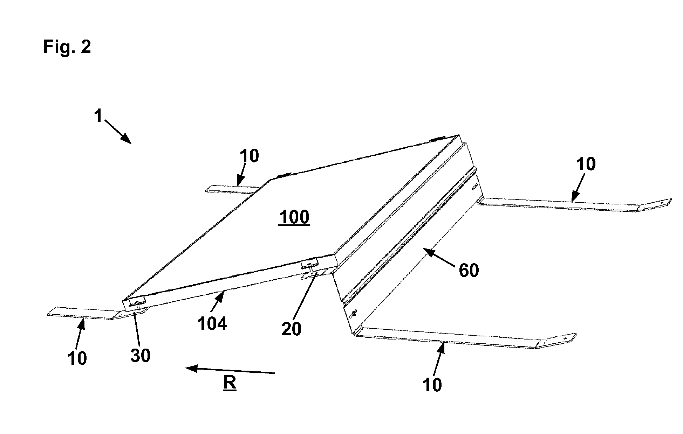

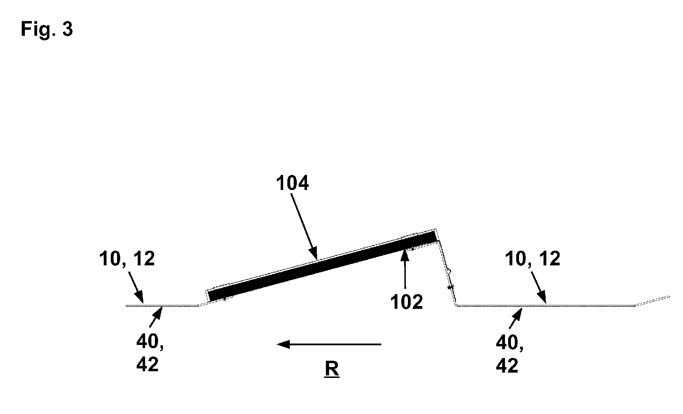

Fig. 2 zeigt ein Photovoltaiksystem 1 mit einem Photovoltaikmodul 100 und Stützmitteln 10, umfassend vier der in Fig. 1 gezeigten Trägerelemente 12 in einer perspektivischen Ansicht. Fig. 3 zeigt dieses in einem Querschnitt. Die ersten Angriffsmittel 20, das Photovoltaikmodul 100, und die zweiten Angriffsmittel 30 sind in Erstreckungsrichtung R hinter einander angeordnet. An einer Hochkante, also an einem den Angriffsmitteln der Trägerelemente 12 mit größerem Abstand zu der Montageebene zugeordneten Abschnitt, sind Abdeckmittel 60 in Form eines Windblechs vorgesehen, die das Strömungsverhalten so verändern, dass eine senkrecht zur Montageebene wirkende Kraft, die zu einem Entfernen des Photovoltaikmoduls 100 aus der Montagebene führen würde, verkleinert wird.

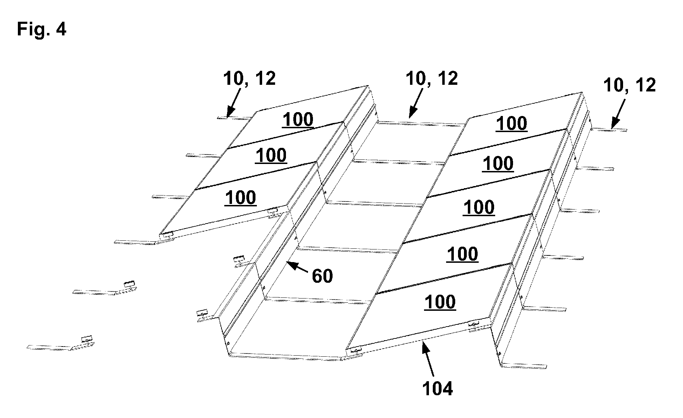

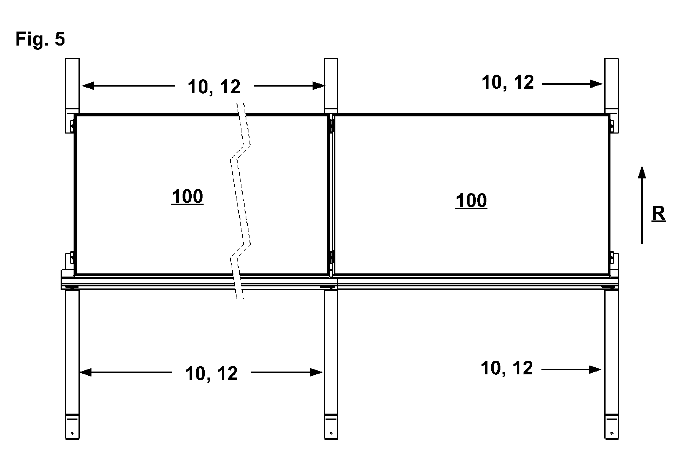

In Fig. 4 ist eine Vielzahl von Photovoltaikmodulen 100 in einer perspektivischen Ansicht gezeigt, die über eine Vielzahl von Trägerelementen 12 zu einem Gesamtsystem verbunden sind. Fig. 5 zeigt einen Ausschnitt dieses Systems in einer schematischen Draufsicht. In einem Rahmenabschnitt 102 ist das Photovoltaikmodul 100 selbstragender Art, trägt also zur Tragfähigkeit des Gesamtsystems bei.

Zur Montage des Photovoltaiksystems werden zunächst mehrere Trägerelemente 12 in der Montageebene in Position gebracht.

Anschließend werden Photovoltaikmodule so auf die Trägerelemente 12 angelegt, dass sie in Erstreckungsrichtung R auf beiden Seiten, also beidseitig, jeweils an den Angriffsflächen von zwei Trägerelementen 12 anliegen. Zur Sicherung der Lage relativ zu den Trägerelementen 12 werden die Photovoltaikmodule durch Fixiermittel 50 in Form von Klemmmitteln an den Angriffsmitteln 20 bzw. 30 fixiert. Hierdurch wird zusätzlich mittelbar die Lage der Trägerelemente 12 zu einander festgelegt.

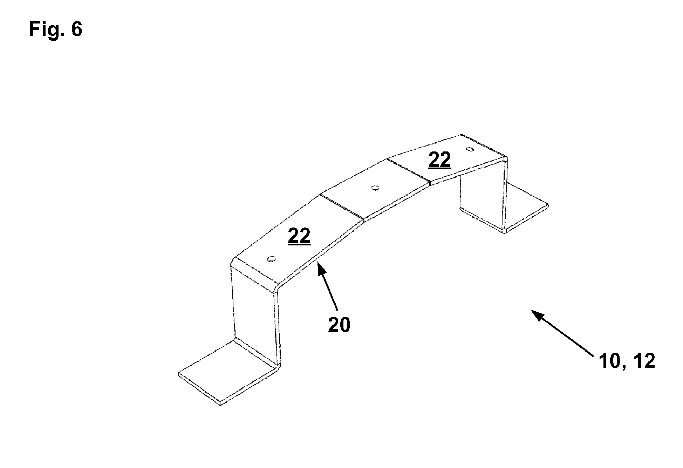

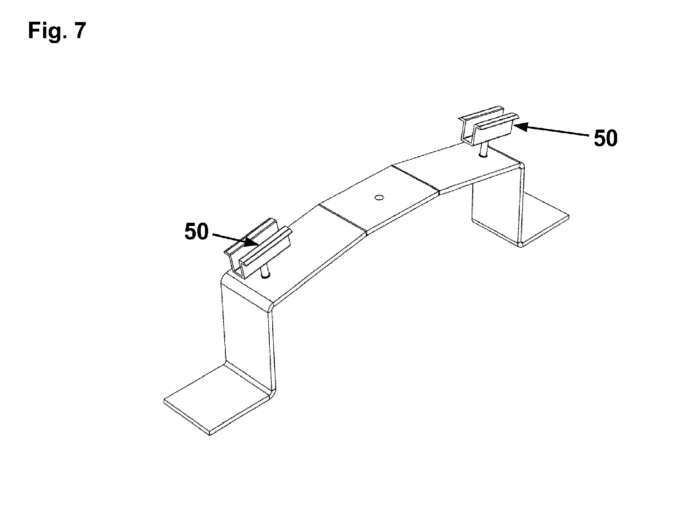

Fig. 6 und Fig. 7 zeigen ein weiteres Ausführungsbeispiel von Stützmitteln 10 mit einem Trägerelement 12 zum Stützen eines Photovoltaikmoduls in einem Photovoltaiksystem, wobei in Fig. 7 zusätzliche Fixiermittel in Form von Klemmmitteln zum Fixieren der Photovoltaikmodule 100 an den Stützmitteln 10 mit dargestellt sind. Die Stützmittel 10 weisen beidseitig erste Angriffsmittel 20 mit einer Angriffsfläche 22 zum Anlegen von Photovoltaikmodulen auf.

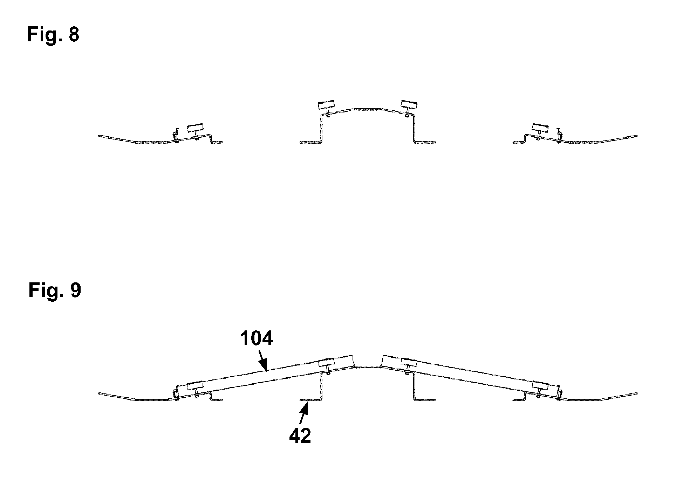

Wie in Fig. 8 gezeigt, umfassen in diesem Ausführungsbeispiel die Stützmittel 10 zum Stützen von Photovoltaikmodulen weitere Trägerelemente 14. Zur Montage des Photovoltaiksystems werden zunächst mehrere der Trägerelemente 12 und der weiteren Trägerelemente 14 in der Montageebene in Position gebracht. Anschließend werden Photovoltaikmodule 100 so auf die Trägerelemente 12 angelegt, dass sie in Erstreckungsrichtung auf einer Seite an den Angriffsflächen von zwei der Trägerelemente 12 anliegen und auf der anderen Seite an den Angriffsflächen von zwei der weiteren Trägerelemente 14 anliegen. Zur Sicherung der Lage relativ zu den Trägerelementen 12 und den weiteren Trägerelementen 14 werden die Photovoltaikmodule durch Klemmmittel an den Angriffsmitteln 20 bzw. 30 fixiert. Hierdurch wird zusätzlich mittelbar die Lage der Trägerelemente 12 und der weiteren Trägerelemente 14 zu einander festgelegt.

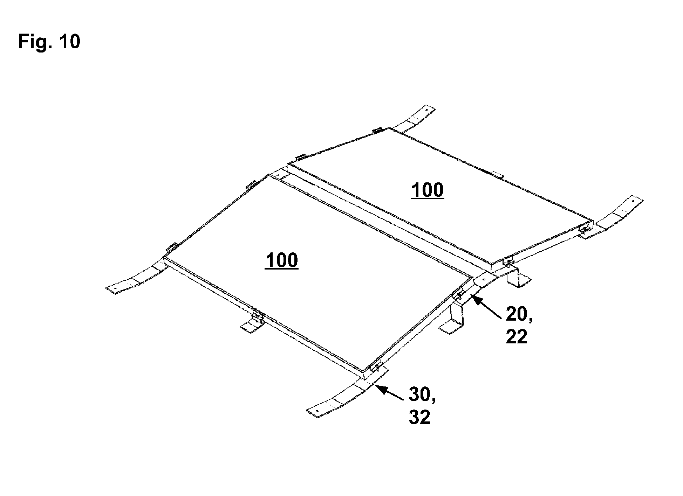

In Fig. 9 und Fig. 10 sind auf diese Art eine Vielzahl von Photovoltaikmodule 100 durch Stützmittel 10 zu einem Phtotovoltaiksystem montiert.

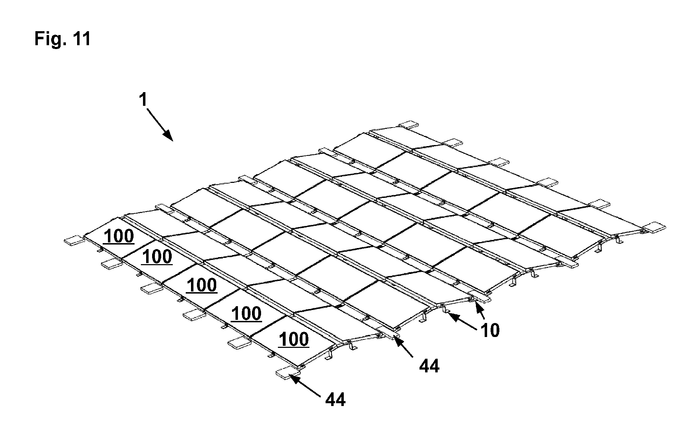

Fig. 11 zeigt eine Vielzahl von Photovoltaikmodulen 100, die durch die Stützmittel 10 in mehreren Reihen als Photovoltaiksystem angeordnet sind. An den weiteren Trägerelementen 14 sind Befestigungsmitteln in Form von die Trägerelemente 14 übergreifenden Gewichtselementen, die die Lage und den Zusammenhalt des Photovoltaiksystem in der Montageebene sichern, ohne dass dieses aufwendig an oder in der Montageebene durch Schrauben oder dergleichen fixiert werden muss.

Die vorliegende Erfindung ermöglicht insgesamt eine besonders einfache und fehlerunanfällige Montage eines Photovoltaiksystems, wobei die für die Montage notwendigen Einzelteile sich auf überraschend einfache und materialsparende Weise herstellen lassen.

### Bezugszeichen

- 1: Photovoltaiksystem

- 10: Stützmittel
- 12: Trägerelement
- 14: weitere Trägerelemente

- 20: erste Angriffsmittel
- 22: erste Angriffsfläche

- 30: zweite Angriffsmittel
- 32: zweite Angriffsfläche

- 40: Zwischenabschnitt
- 42: Montageebenenanlagenfläche
- 44: Befestigungsmittel

- 50: Fixiermittel

- 60: Abdeckmittel

- 100: Photovoltaikmodul
- 102: Rahmenabschnitt
- 104: Abschnitt

- R: Erstreckungsrichtung

## Patentansprüche

1. Photovoltaiksystem (1) mit mindestens einem Photovoltaikmodul (100) und Stützmitteln (10) zum Stützen und/oder Halten des jeweiligen Photovoltaikmoduls (100) in einer einen Neigungswinkel einschließenden Lage zu einer Montageebene,
**dadurch gekennzeichnet,**
**dass** die Stützmittel (10) für jedes der Photovoltaikmodule (100) erste und zweite Angriffsmittel (20 bzw. 30) umfassen, die jeweils an einen Rahmenabschnitt (102) des zugehörigen Photovoltaikmoduls (100) angreifen, wobei die ersten Angriffsmittel (20), das Photovoltaikmodul (100) und die zweiten Angriffsmittel (30) in einer Erstreckungsrichtung (R) auf einander folgend angeordnet sind,
und wobei die mechanische Verbindung in der Erstreckungsrichtung (R) zwischen den ersten und der zweiten Angriffsmittel (20 bzw. 30) nur über einen Abschnitt (104) des Photovoltaikmoduls (100), insbesondere einen Rahmenabschnitt (102) des Photovoltaikmoduls (100), erfolgt.

2. Photovoltaiksystem nach Anspruch 1,
**dadurch gekennzeichnet,**
**dass** die Stützmittel (10) mindestens ein einstückiges Trägerelement (12, 14), insbesondere als ein Flachprofil, bevorzugt als vorbehandeltes Metallwerkstück, umfassen, das sowohl einends die ersten oder zweiten Angriffsmittel (20 bzw. 30) für ein erstes Photovoltaikmodul (100) als auch anderenends die ersten oder zweiten Angriffsmittel (20 bzw. 30) für ein zweites Photovoltaikmodul (100) ganz oder teilweise ausbildet.

3. Photovoltaiksystem nach Anspruch 2,
**dadurch gekennzeichnet,**
**dass** mindestens eines der einstückigen Trägerelemente (12, 14) in dem die ersten bzw. zweiten Angriffsmittel (20 bzw. 30) für das erste Photovoltaikmodul ausbildenden Abschnitt und/oder in dem die ersten bzw. zweiten Angriffsmittel für das zweite Photovoltaikmodul ausbildenden Abschnitt eine erste und/oder zweite Angriffsfläche (22; 32) zum Angreifen an das Photovoltaikmodul (100) aufweist, die sich in einem Winkel zwischen 0 ° und 60°, bevorzugt zwischen 5° und 45°, besonders bevorzugt zwischen 10° und 30°, und/oder im Neigungswinkel des zugehörigen Photovoltaikmoduls (100), zur Montageebene erstreckt.

4. Photovoltaiksystem nach Anspruch 2 oder 3,
**dadurch gekennzeichnet,**
**dass** das Trägerelement (12, 14) einen Zwischenabschnitt (40) mit einer sich in der Montageebene erstreckenden Montageebenenanlagenfläche (42) aufweist,
wobei bevorzugt der Zwischenabschnitt (40) eine Länge aufweist, die mindestens dem 1-fachen, bevorzugt dem 1,5 bis 3,5-fachen, weiter bevorzugt dem 2 bis 3-fachen, des maximalen Abstandes der ersten und/oder zweiten Angriffsfläche (22 bzw. 32) von der Montageebene entspricht
und/oder im Zwischenabschnitt Befestigungsmittel zum Befestigen des Trägerelements (12, 14) an oder auf der Montageebene vorgesehen sind.

5. Photovoltaiksystem nach Anspruch 4,
**dadurch gekennzeichnet,**
**dass** die Befestigungsmittel ein übergreifendes Gewichtselement umfassen.

6. Photovoltaiksystem nach einem der Ansprüche 2 bis 5,
**dadurch gekennzeichnet,**
**dass** jedem Photovoltaikmodul (100) beidseitig zwei Trägerelemente (12, 14) zugeordnet sind,
wobei bevorzugt mindestens eines der Trägerelemente mit der ersten und/oder zweiten Angriffsfläche (22 bzw. 32) jeweils zwei benachbarte Photovoltaikmodule (100) stützt.

7. Photovoltaiksystem nach einem der vorhergehenden Ansprüche,
**dadurch gekennzeichnet,**
**dass** die ersten Angriffsmittel (20) einen größeren Abstand zu der Montageebene aufweisen als die zweiten Angriffsmittel (30).

8. Photovoltaiksystem nach einem der vorhergehenden Ansprüche,
**dadurch gekennzeichnet,**
**dass** der Neigungswinkel zwischen 0° und 60°, bevorzugt zwischen 5° und 45°, besonders bevorzugt zwischen 10° und 30°, beträgt.

9. Photovoltaiksystem nach einem der vorhergehenden Ansprüche,
**dadurch gekennzeichnet,**
**dass** mehrere Photovoltaikmodule (100) durch Verbindung durch Stützmittel (10) in mehreren in Erstreckungsrichtung (R) auf einander folgenden Reihen angeordnet sind.

10. Photovoltaiksystem nach einem der vorhergehenden Ansprüche,
**dadurch gekennzeichnet,**
**dass** Abdeckmittel (60) vorgesehen sind, die so ausgebildet und angeordnet sind, dass sie das Windströmungsverhalten so beeinflussen, dass eine Windkraft, die die Photovoltaikmodule (100) von der Montageebene weg beschleunigen würde, minimiert wird.

11. Photovoltaiksystem nach einem der vorhergehenden Ansprüche,
**dadurch gekennzeichnet,**
**dass** mindestens ein Stützelement, insbesondere Stützfuß, in dem Zwischenabschnitt (40) mindestens eines der Photovoltaikmodule (100) vorgesehen ist, der dieses oder diese Photovoltaikmodule (100) in dem Zwischenabschnitt (40) zumindest abschnittsweise stützt.

12. Photovoltaiksystem nach einem der vorhergehenden Ansprüche,
**dadurch gekennzeichnet,**
**dass** den ersten und/oder zweiten Angriffsmitteln (20 bzw. 30) Fixiermittel 50, insbesondere Klemm- und/oder Schraubmittel, zum Fixieren der Photovoltaikmodule (100) an den Angriffsmitteln (20 bzw. 30), zugeordnet sind.

13. Verwendung eines Trägerelements (12, 14) mit einem Montageebenenabschnitt (42) zur Montage auf oder an einer unterliegenden Montageebene, einer ersten, gegenüber dem Montageabschnitt abgewinkelten Angriffsfläche (22) zum mechanischen Verbinden mit einem ersten Rahmenabschnitt eines ersten Photovoltaikmoduls (100) und einer zweiten, gegenüber dem Montageabschnitt abgewinkelten Angriffsfläche (32) zum mechanischen Verbinden mit einem zweiten Rahmenabschnitt eines zweiten Photovoltaikmoduls (100) zur Herstellung eines Photovoltaiksystems (1) mit mehreren Photovoltaikmodulen (100), insbesondere nach einem der vorhergehenden Ansprüche, wobei das erste und das zweite Photovoltaikmodul (100) zu einander benachbart montiert sind,
**dadurch gekennzeichnet,**
**dass** das Trägerelement (12, 14), insbesondere als Profilträgerelement, einstückig ausgebildet ist.

14. Verwendung eines einstückigen Trägerelements nach vorhergehendem Anspruch,
**dadurch gekennzeichnet,**
**dass** sich die erste und zweite Angriffsfläche (22 bzw. 32) in parallelen Ebenen erstrecken.

15. Verwendung eines einstückigen Trägerelements nach Anspruch 13 oder 14,
**dadurch gekennzeichnet,**
**dass** zwischen den Angriffsflächen (22 bzw. 32) ein Zwischenabschnitt vorgesehen ist, der in einem Winkel zwischen 0° und 60°, bevorzugt zwischen 5° und 45°, besonders bevorzugt zwischen 10° und 30°, zu den jeweiligen Angriffsflächen angeordnet ist.
